(19) Europäisches Patentamt
European Patent Office
Office européen des brevets

(11) **EP 3 835 391 A1**

(12) **EUROPEAN PATENT APPLICATION**
published in accordance with Art. 153(4) EPC

(43) Date of publication:
**16.06.2021 Bulletin 2021/24**

(51) Int Cl.:
**C09K 5/04** (2006.01)

(21) Application number: **19846559.3**

(22) Date of filing: **05.06.2019**

(86) International application number:
**PCT/JP2019/022378**

(87) International publication number:
**WO 2020/031484 (13.02.2020 Gazette 2020/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **09.08.2018 JP 2018150252**

(71) Applicant: **DAIKIN INDUSTRIES, LTD.**
**Osaka 530-8323 (JP)**

(72) Inventors:
• **OHKUBO, Shun**
  **Osaka-shi, Osaka 530-8323 (JP)**
• **KUROKI, Hitomi**
  **Osaka-shi, Osaka 530-8323 (JP)**
• **ITANO, Mitsushi**
  **Osaka-shi, Osaka 530-8323 (JP)**
• **YAMADA, Takurou**
  **Osaka-shi, Osaka 530-8323 (JP)**

(74) Representative: **Hoffmann Eitle**
**Patent- und Rechtsanwälte PartmbB**
**Arabellastraße 30**
**81925 München (DE)**

(54) **COMPOSITION CONTAINING REFRIGERANT, FREEZING METHOD USING SAID COMPOSITION, OPERATING METHOD OF REFRIGERATOR, AND REFRIGERATOR**

(57)     The present disclosure provides a composition comprising a refrigerant characterized by having a low GWP and a refrigerating capacity and COP that are equivalent to those of R410A. Specifically, the present disclosure provides a composition comprising a refrigerant, the refrigerant comprising difluoromethane (R32) and pentafluoroethane (R125), wherein the total concentration of R32 and R125 is 99.5 mass% or more, and wherein R32 is present in an amount of 53.1 to 56.0 mass%, and R125 is present in an amount of 44.0 to 46.9 mass%, based on the total mass of R32 and R125.

Fig. 1

EP 3 835 391 A1

**Description**

Technical Field

The present disclosure relates to a composition comprising a refrigerant, and a refrigeration method, a method for operating a refrigeration apparatus, and a refrigeration apparatus, all of which use the above composition.

Background Art

Mixtures of fluorinated hydrocarbons, such as difluoromethane ($CH_2F_2$, R32, boiling point: -52°C), pentafluoroethane ($CF_3CHF_2$, R125, boiling point: -48°C), 1,1,1,2-tetrafluoroethane ($CF_3CH_2F$, R134a, boiling point: -26°C), 2,3,3,3-tetrafluoropropen ($CF_3CF=CH_2$, R1234yf, boiling point: -29°C), and E- or Z-1,3,3,3-tetrafluoropropen ($CF_3CH=CHF$, R1234ze, boiling point: -19°C), have been used as refrigerants for air conditioners, refrigeration apparatuses, refrigerators, and other similar equipment.

Among the above fluorinated hydrocarbons, PTL 1 discloses a binary mixed refrigerant comprising R32 and R125 at 50/50 mass% (R410A).

Citation List

Patent Literature

PTL 1: WO1991/005027

Summary of Invention

Technical Problem

An object of the present disclosure is to provide a composition comprising a refrigerant, the refrigerant having a refrigerating capacity and coefficient of performance (hereinafter, also simply referred to as "COP") that are equivalent to those of R410A, and having a low GWP (2000 or less).

Another object of the present disclosure is to provide a refrigeration method, a method for operating a refrigeration apparatus, and a refrigeration apparatus, all of which use the above composition.

Solution to Problem

The present disclosure provides the invention according to the following embodiments.

Item 1.
A composition comprising a refrigerant, the refrigerant comprising difluoromethane (R32) and pentafluoroethane (R125),
wherein the total concentration of R32 and R125 is 99.5 mass% or more, and
wherein R32 is present in an amount of 53.1 to 56.0 mass%, and R125 is present in an amount of 44.0 to 46.9 mass%, based on the total mass of R32 and R125.
Item 2. A composition comprising a refrigerant, the refrigerant comprising difluoromethane (R32) and pentafluoroethane (R125),
wherein the total concentration of R32 and R125 is 99.5 mass% or more, and
wherein R32 is present in an amount of 60.5 to 62.5 mass%, and R125 is present in an amount of 37.5 to 39.5 mass%, based on the total mass of R32 and R125.
Item 3.
The composition according to Item 1 or 2, wherein the refrigerant consists of R32 and R125.
Item 4.
A composition comprising a refrigerant, the refrigerant comprising difluoromethane (R32), pentafluoroethane (R125), and 2,3,3,3-tetrafluoropropen (R1234yf),
wherein the total concentration of the three components is 99.5 mass% or more, and
wherein the mass ratio of the three components in a triangle composition diagram having the three components as vertices falls within a region surrounded by a quadrilateral having, as vertices, the following four points:

point A (R32/R125/R1234yf = 62.2/36.8/1.0 mass%),

point B (R32/R125/R1234yf = 36.5/30.0/33.5 mass%),
point C (R32/R125/R1234yf = 26.2/57.5/16.3 mass%), and
point D (R32/R125/R1234yf = 45.8/53.2/1.0 mass%).

Item 5.
The composition comprising a refrigerant according to Item 4, the refrigerant comprising R32, R125, and R1234yf,
wherein the total concentration of the three components is 99.5 mass% or more, and
wherein the mass ratio of the three components in a triangle composition diagram having the three components as vertices falls within a region surrounded by a quadrilateral having, as vertices, the following four points:

point A (R32/R125/R1234yf = 62.2/36.8/1.0 mass%),
point B (R32/R125/R1234yf = 36.5/30.0/33.5 mass%),
point E (R32/R125/R1234yf = 28.3/51.6/20.1 mass%), and
point F (R32/R125/R1234yf = 51.9/47.1/1.0 mass%).

Item 6.
The composition comprising a refrigerant according to Item 4 or 5, the refrigerant comprising R32, R125, and R1234yf,
wherein the total concentration of the three components is 99.5 mass% or more, and
wherein the mass ratio of the three components in a triangle composition diagram having the three components as vertices falls within a region surrounded by a quadrilateral having, as vertices, the following four points:

point A (R32/R125/R1234yf = 62.2/36.8/1.0 mass%),
point G (R32/R125/R1234yf = 35.4/50.3/14.3 mass%),
point H (R32/R125/R1234yf = 43.0/31.7/25.3 mass%), and
point F (R32/R125/R1234yf = 51.9/47.1/1.0 mass%).

Item 7.
The composition according to any one of Items 4 to 6, wherein the refrigerant consists of R32, R125, and R1234yf.
Item 8.
A composition comprising a refrigerant, the refrigerant comprising difluoromethane (R32), pentafluoroethane (R125), and trans-1,3,3,3-tetrafluoropropen (R1234ze(E)),
wherein the total concentration of the three components is 99.5 mass% or more, and
wherein the mass ratio of the three components in a triangle composition diagram having the three components as vertices falls within a region surrounded by a quadrilateral having, as vertices, the following four points:

point P (R32/R125/R1234ze(E) = 62.2/36.8/1.0 mass%),
point Q (R32/R125/R1234ze(E) = 44.0/30.3/25.7 mass%),
point R (R32/R125/R1234ze(E) = 29.9/56.7/13.4 mass%), and
point S (R32/R125/R1234ze(E) = 45.8/53.2/1.0 mass%).

Item 9.
The composition comprising a refrigerant according to Item 8, the refrigerant comprising R32, R125, and R1234ze(E),
wherein the total concentration of the three components is 99.5 mass% or more, and
wherein the mass ratio of the three components in a triangle composition diagram having the three components as vertices falls within a region surrounded by a quadrilateral having, as vertices, the following four points:

point P (R32/R125/R1234ze(E) = 62.2/36.8/1.0 mass%),
point Q (R32/R125/R1234ze(E) = 44.0/30.3/25.7 mass%),
point T (R32/R125/R1234ze(E) = 33.4/50.6/16.0 mass%), and
point U (R32/R125/R1234ze(E) = 51.9/47.1/1.0 mass%).

Item 10.
The composition comprising a refrigerant according to Item 8 or 9, the refrigerant comprising R32, R125, and R1234ze(E),
wherein the total concentration of the three components is 99.5 mass% or more, and
wherein the mass ratio of the three components in a triangle composition diagram having the three components as vertices falls within a region surrounded by a quadrilateral having, as vertices, the following four points: point P (R32/R125/R1234ze(E) = 62.2/36.8/1.0 mass%), point V (R32/R125/R1234ze(E) = 49.0/32.0/19.0 mass%), point W (R32/R125/R1234ze(E) = 39.2/49.5/11.3 mass%), and point U (R32/R125/R1234ze(E) = 51.9/47.1/1.0 mass%).
Item 11.
The composition according to any one of Items 8 to 10, wherein the refrigerant consists of R32, R125, and R1234ze(E).
Item 12.
The composition according to any one of Items 1 to 11, wherein the refrigerant is for use as an alternative refrigerant for R410A.
Item 13.
The composition according to any one of Items 1 to 12, wherein the composition comprises at least one substance selected from the group consisting of water, tracers, ultraviolet fluorescent dyes, stabilizers, and polymerization inhibitors.
Item 14.
The composition according to any one of Items 1 to 13, the composition further comprising a refrigeration oil and being for use as a working fluid for a refrigeration apparatus.
Item 15.
The composition according to Item 14, wherein the refrigeration oil contains at least one polymer selected from the group consisting of polyalkylene glycol (PAG), polyol ester (POE), and polyvinyl ether (PVE).
Item 16.
A refrigeration method comprising operating a refrigeration cycle using the composition of any one of Items 1 to 15.
Item 17.
A method for operating a refrigeration apparatus that operates a refrigeration cycle using the composition of any one of Items 1 to 15.
Item 18.
A refrigeration apparatus comprising the composition of any one of Items 1 to 15 as a working fluid.
Item 19.
The refrigeration apparatus according to Item 18, wherein the refrigeration apparatus is an air-conditioning system, a refrigerator, a freezer, a water cooler, an ice maker, a refrigerated showcase, a freezing showcase, a freezing and refrigerating unit, a refrigerating machine for freezing and refrigerating warehouses, an air-conditioning system for vehicles, a turbo refrigerating machine, or a screw refrigerating machine.
Item 20. The composition according to any one of Items 1 to 15 for use as a refrigerant.
Item 21. The composition according to Item 20 for use as a refrigerant in a refrigeration apparatus.
Item 22. The composition according to Item 21, wherein the refrigeration apparatus is an air-conditioning system, a refrigerator, a freezer, a water cooler, an ice maker, a refrigerated showcase, a freezing showcase, a freezing and refrigerating unit, a refrigerating machine for freezing and refrigerating warehouses, an air-conditioning system for vehicles, a turbo refrigerating machine, or a screw refrigerating machine.
Item 23. Use of the composition according to any one of Items 1 to 15 as a refrigerant.
Item 24. The use according to Item 23 in a refrigeration apparatus.
Item 25. The use according to Item 24, wherein the refrigeration apparatus is an air-conditioning system, a refrigerator, a freezer, a water cooler, an ice maker, a refrigerated showcase, a freezing showcase, a freezing and refrigerating unit, a refrigerating machine for freezing and refrigerating warehouses, an air-conditioning system for vehicles, a turbo refrigerating machine, or a screw refrigerating machine.

Advantageous Effects of Invention

The composition comprising a refrigerant according to the present disclosure has a refrigerating capacity and COP that are equivalent to those of R410A, and has a low GWP (2000 or less).

Brief Description of Drawings

Fig. 1 shows the mass ratio of R32, R125, and R1234yf (a region surrounded by a quadrilateral having four points A, B, C, and D as vertices) contained in the refrigerant according to the present disclosure in a triangle composition diagram of R32, R125, and R1234yf.
Fig. 2 shows the mass ratio of R32, R125, and R1234ze(E) (a region surrounded by a quadrilateral having four points P, Q, R, and S as vertices) contained in the refrigerant according to the present disclosure in a triangle composition diagram of R32, R125, and R1234ze(E).
Fig. 3 is a schematic view of an experiment device for determining flammability (flammable or non-flammable).

Description of Embodiments

The present inventors conducted intensive studies to solve the above problem, and consequently found that a composition comprising specific concentrations of R32 and R125 as refrigerants has the characteristics described above.

The present disclosure has been completed as a result of further research based on this finding. The present invention includes the following embodiments.

Definition of Terms

In the present specification, the terms "comprise" and "contain" are used with the intention of including the concepts of "consisting essentially of" and "consisting of."

In the present specification, the term "refrigerant" includes at least compounds that are specified in ISO817 (International Organization for Standardization), and that are given a refrigerant number (ASHRAE number) representing the type of refrigerant with "R" at the beginning; and further includes refrigerants that have characteristics equivalent to those of such refrigerants even if a refrigerant number is not yet given.

Refrigerants are broadly divided into fluorocarbon-based compounds and non-fluorocarbon-based compounds in terms of the structure of the compounds. Fluorocarbon-based compounds include chlorofluorocarbons (CFC), hydrochlorofluorocarbons (HCFC), and hydrofluorocarbons (HFC). Non-fluorocarbon-based compounds include propane (R290), propylene (R1270), butane (R600), isobutane (R600a), carbon dioxide (R744), ammonia (R717), and the like.

The term "composition comprising a refrigerant" used in the present specification at least includes:

(1) a refrigerant itself (including a mixture of refrigerants, i.e., a mixed refrigerant);
(2) a composition that can be used for obtaining a working fluid for a refrigerating machine by further comprising one or more other components and mixing with at least a refrigeration oil; and
(3) a working fluid for a refrigeration apparatus, containing a refrigeration oil.

Among these three modes, composition (2) is referred to as a "refrigerant composition" in the present specification to distinguish it from a refrigerant itself (including a mixed refrigerant). Further, the working fluid for a refrigeration apparatus (3) is referred to as "a refrigeration oil-containing working fluid" to distinguish it from the "refrigerant composition."

In the present specification, when the term "alternative" is used in a context in which the first refrigerant is replaced with the second refrigerant, the first type of alternative means that equipment designed for operation using the first refrigerant can be operated using the second refrigerant under optimum conditions, optionally with changes of only a few parts (at least one of the following: refrigeration oil, gasket, packing, expansion valve, dryer, other parts) and equipment adjustment. In other words, this type of alternative means that the same equipment is operated with an alternative refrigerant. Embodiments of this type of alternative include drop-in alternatives, nearly drop-in alternatives, and retrofits, in the order in which the extent of changes and adjustment necessary for replacing the first refrigerant with the second refrigerant is smaller.

The term "alternative" also includes a second type of alternative, which means that equipment designed for operation using the second refrigerant is operated for the same use as the existing use with the first refrigerant by using the second refrigerant. This type of alternative means that the same use is achieved with an alternative refrigerant.

In the present specification, the term "refrigeration apparatus" refers to apparatuses in general that draw heat from an object or space to make its temperature lower than the temperature of the ambient air, and maintain the low temperature. In other words, refrigeration apparatuses in the broad sense refer to conversion apparatuses that gain energy from the outside to do work, and that perform energy conversion, in order to transfer heat from where the temperature is lower to where the temperature is higher. In the present disclosure, "refrigeration apparatus" is synonymous with "heat pump" in the broad sense.

In the present disclosure, the term "refrigeration apparatus" is distinguished from "heat pump" in the narrow sense, depending on the difference in the applied temperature range and operating temperature. In this case, an apparatus whose low-temperature heat source is placed in a temperature range lower than the air temperature may be called a "refrigeration apparatus," while an apparatus whose low-temperature heat source is placed near the air temperature to use the heat-release action caused by driving the refrigeration cycle may be called a "heat pump." Additionally, there are apparatuses that have both the function of refrigeration apparatuses in the narrow sense and the function of heat pumps in the narrow sense, despite them being a single machine, such as air conditioners that provide both a cooling mode and a heating mode. In the present specification, unless otherwise indicated, the terms "refrigeration apparatus" and "heat pump" are used in the broad sense throughout the specification.

In the present specification, the term "air-conditioning system for vehicles" is a type of refrigeration apparatus for use in vehicles, such as gasoline vehicles, hybrid vehicles, electric vehicles, and hydrogen vehicles. The air-conditioning system for vehicles refers to a refrigeration apparatus that has a refrigeration cycle in which heat exchange is performed by an evaporator using a liquid refrigerant, the evaporated refrigerant gas is absorbed by a compressor, the adiabatically compressed refrigerant gas is cooled and liquefied with a condenser, the liquefied refrigerant is adiabatically expanded by passing it through an expansion valve, and then the refrigerant is supplied again in the form of a liquid to the evaporator.

In the present specification, the term "turbo refrigerating machine" is a type of large refrigeration apparatus and refers to a refrigeration apparatus that has a refrigeration cycle in which heat exchange is performed by an evaporator using a liquid refrigerant, the evaporated refrigerant gas is absorbed by a centrifugal compressor, the adiabatically compressed refrigerant gas is cooled and liquefied with a condenser, the liquefied refrigerant is adiabatically expanded by passing it through an expansion valve, and then the refrigerant is supplied again in the form of a liquid to the evaporator. The term "large refrigerating machine" refers to a large air-conditioner that is intended for air conditioning in a unit of a building.

In the present specification, the technical meanings of the terms "non-flammable" and "slightly flammable" are as described below.

In the present specification, "non-flammable" refrigerants refer to those whose worst case of formulation for flammability (WCF), which is the most flammable point in the allowable refrigerant concentration range according to the US ANSI/ASHRAE Standard 34-2013, is classified as Class 1.

In the present specification, "slightly flammable" refrigerants refer to those whose WCF formulation is classified as Class 2L according to the US ANSI/ASHRAE Standard 34-2013.

In the present specification, the GWP (AR4) is evaluated based on the values stated in the Intergovernmental Panel on Climate Change (IPCC), fourth report.

In the present specification, the GWP (AR5) is based on the values stated in the IPCC, fifth report.

## 1. Composition

The composition according to the present disclosure comprises a refrigerant, and examples of the refrigerant include "Refrigerant 1," "Refrigerant 2," "Refrigerant 3," and "Refrigerant 4." Refrigerants 1, Refrigerant 2, Refrigerant 3, and Refrigerant 4 are each described below.

Hereinafter, in the present specification, "the refrigerants according to the present disclosure" refer to Refrigerant 1, Refrigerant 2, Refrigerant 3, and Refrigerant 4.

The refrigerants according to the present disclosure can be roughly classified into Embodiments 1, 2, 3, and 4 (also referred to as Refrigerant 1, Refrigerant 2, Refrigerant 3, and Refrigerant 4, respectively).

## 1.1 Refrigerant Component

### 1.1.1 Embodiment 1: Refrigerant 1 (R32/R125)

Refrigerant 1 comprises R32 and R125 as essential components.

The total concentration of R32 and R125 in the entire Refrigerant 1 is 99.5 mass% or more. In other words, Refrigerant 1 comprises R32 and R125 in amounts such that the sum of the concentrations thereof is 99.5 mass% or more.

In Refrigerant 1, R32 is present in an amount of 53.1 to 56.0 mass%, and R125 is present in an amount of 44.0 to 46.9 mass%, based on the total mass of R32 and R125.

Due to this structure, Refrigerant 1 has various characteristics, i.e., (1) it has a low GWP (AR4) (2000 or less), (2) it is non-flammable, and (3) when used as an alternative refrigerant for R410A, it has a refrigerating capacity and COP that are equivalent to those of R410A.

Further, due to the above structure, Refrigerant 1 has a GWP (AR4) of 1800 or more and 2000 or less, and is non-flammable.

Refrigerant 1 may have a refrigerating capacity of 85% or more relative to R410A, preferably 90% or more, more preferably 95% or more, and particularly preferably 100% or more.

Because its GWP (AR4) is 2000 or less, Refrigerant 1 can significantly reduce the environmental load compared to other general-purpose refrigerants, from the viewpoint of global warming.

In terms of energy consumption efficiency, it is preferable for Refrigerant 1 that the ratio of power consumed in the refrigeration cycle to refrigerating capacity (coefficient of performance: COP) is higher than that of R410A. Specifically, the COP relative to R410A is preferably 98% or more, more preferably 99% or more, and particularly preferably 100% or more.

In Refrigerant 1, R32 is preferably present in an amount of 53.2 to 55.9 mass%, and R125 is preferably present in an amount of 44.1 to 46.8 mass%, based on the total mass of R32 and R125. In this case, Refrigerant 1 has a GWP (AR4) of 2000 or less, is non-flammable, and has a COP equivalent to that of R410A and a refrigerating capacity superior to that of R410A.

In Refrigerant 1, R32 is more preferably present in an amount of 53.5 to 55.5 mass%, and R125 is more preferably present in an amount of 44.5 to 46.5 mass%, based on the total mass of R32 and R125. In this case, Refrigerant 1 has a GWP (AR4) of 2000 or less, is non-flammable, and has a COP equivalent to that of R410A and a refrigerating capacity superior to that of R410A.

Refrigerant 1 comprises R32 and R125 in amounts such that the sum of the concentrations thereof is 99.5 mass% or more. In particular, the total amount of R32 and R125 in the entire Refrigerant 1 is preferably 99.7 mass% or more, more preferably 99.8 mass% or more, and even more preferably 99.9 mass% or more.

Refrigerant 1 may further comprise other refrigerants, in addition to R32 and R125, within a range in which the above characteristics are not impaired. In this case, the content of other refrigerants in the entire Refrigerant 1 is preferably 0.5 mass% or less, more preferably 0.3 mass% or less, even more preferably 0.2 mass% or less, and particularly preferably 0.1 mass% or less. Other refrigerants are not limited, and can be selected from a wide range of known refrigerants that are widely used in this field. Refrigerant 1 may comprise a single other refrigerant, or two or more other refrigerants.

Refrigerant 1 particularly preferably consists of R32 and R125. In other words, it is particularly preferable for Refrigerant 1 that the total concentration of R32 and R125 in the entire Refrigerant 1 is 100 mass%.

When Refrigerant 1 consists of R32 and R125, R32 is preferably present in an amount of 53.1 to 56.0 mass%, and R125 is preferably present in an amount of 44.0 to 46.9 mass%, based on the total mass of R32 and R125. In this case, Refrigerant 1 has various characteristics, i.e., (1) it has a low GWP (AR4) (2000 or less), (2) it is non-flammable, and (3) when used as an alternative refrigerant for R410A, it has a refrigerating capacity and COP that are equivalent to those of R410A.

When Refrigerant 1 consists of R32 and R125, R32 is more preferably present in an amount of 53.2 to 55.9 mass%, and R125 is more preferably present in an amount of 44.1 to 46.8 mass%, based on the total mass of R32 and R125. In this case, Refrigerant 1 has a GWP (AR4) of 2000 or less, is non-flammable, and has a COP equivalent to that of R410A and a refrigerating capacity superior to that of R410A.

When Refrigerant 1 consists of R32 and R125, R32 is even more preferably present in an amount of 53.5 to 55.5 mass%, and R125 is even more preferably present in an amount of 44.5 to 46.5 mass%, based on the total mass of R32 and R125. In this case, Refrigerant 1 has a GWP (AR4) of 2000 or less, is non-flammable, and has a COP equivalent to that of R410A and a refrigerating capacity superior to that of R410A.

Since Refrigerant 1 is non-flammable (the ASHRAE flammability classification according to the US ANSI/ASHRAE Standard 34-2013 being Class 1), as with R410A, it is safer and has a wider usable range than flammable refrigerants.

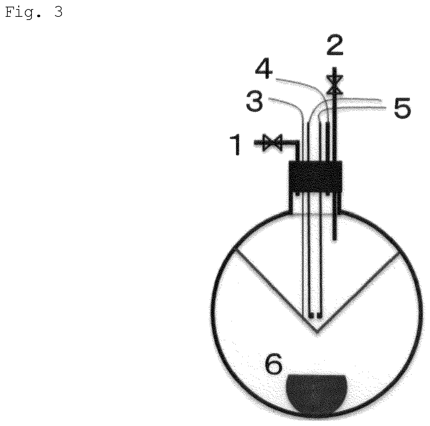

Moreover, Refrigerant 1 is non-flammable under conditions assuming a high temperature and a high humidity (a relative humidity of 50% at 36°C) when the flammable range is measured using a measurement device according to ASTM E681-09 (see Fig. 3). Therefore, Refrigerant 1 is non-flammable even under conditions assuming a high temperature and a high humidity (a relative humidity of 50% at 36°C), and is thus a safe refrigerant from the viewpoint of flammability.

That is, Refrigerant 1 has the characteristics that the ASHRAE flammable component is classified as Class 1 according to the US ANSI/ASHRAE Standard 34-2013, and that it is non-flammable even under conditions assuming a high temperature and a high humidity (a relative humidity of 50% at 36°C).

1.1.2 Embodiment 2: Refrigerant 2 (R32/R125)

Refrigerant 2 comprises R32 and R125 as essential components.

The total concentration of R32 and R125 in the entire Refrigerant 2 is 99.5 mass% or more. In other words, Refrigerant 2 comprises R32 and R125 in amounts such that the sum of the concentrations thereof is 99.5 mass% or more.

In Refrigerant 2, R32 is present in an amount of 60.5 to 62.5 mass%, and R125 is present in an amount of 37.5 to 39.5 mass%, based on the total mass of R32 and R125.

Due to this structure, Refrigerant 2 has various characteristics, i.e., (1) it has a low GWP (AR4) (1800 or less), (2) it is non-flammable (the ASHRAE flammability classification according to the US ANSI/ASHRAE Standard 34-2013 being Class 1), and (3) when used as an alternative refrigerant for R410A, it has a refrigerating capacity and COP that are equivalent to those of R410A.

Refrigerant 2 may have a refrigerating capacity of 85% or more relative to R410A, preferably 90% or more, more preferably 95% or more, even more preferably 100% or more, and particularly preferably 103% or more.

Because its GWP is 1800 or less, Refrigerant 2 can significantly reduce the environmental load compared to other general-purpose refrigerants, from the viewpoint of global warming.

In terms of energy consumption efficiency, it is preferable for Refrigerant 2 that the ratio of power consumed in the refrigeration cycle to refrigerating capacity (coefficient of performance: COP) is higher than that of R410A. Specifically, the COP relative to R410A is preferably 98% or more, more preferably 100% or more, and particularly preferably 101% or more.

In Refrigerant 2, R32 is preferably present in an amount of 61 to 62.5 mass%, and R125 is preferably present in an amount of 37.5 to 39 mass%, based on the total mass of R32 and R125. In this case, Refrigerant 2 has a GWP (AR4) of 1800 or less, is non-flammable, and has a COP equivalent to that of R410A and a refrigerating capacity superior to that of R410A.

In Refrigerant 2, R32 is more preferably present in an amount of 61.5 to 62.5 mass%, and R125 is more preferably present in an amount of 37.5 to 38.5 mass%, based on the total mass of R32 and R125. In this case, Refrigerant 2 has a GWP (AR4) of 1800 or less, is non-flammable, and has a COP equivalent to that of R410A and a refrigerating capacity superior to that of R410A.

Refrigerant 2 comprises R32 and R125 in amounts such that the sum of the concentrations thereof is 99.5 mass% or more. In particular, the total amount of R32 and R125 in the entire Refrigerant 1 is preferably 99.7 mass% or more, more preferably 99.8 mass% or more, and even more preferably 99.9 mass% or more.

Refrigerant 2 may further comprise other refrigerants, in addition to R32 and R125, within a range in which the above characteristics are not impaired. In this case, the content of other refrigerants in the entire Refrigerant 2 is preferably 0.5 mass% or less, more preferably 0.3 mass% or less, even more preferably 0.2 mass% or less, and particularly preferably 0.1 mass% or less. Other refrigerants are not limited, and can be selected from a wide range of known refrigerants that are widely used in this field. Refrigerant 2 may comprise a single other refrigerant, or two or more other refrigerants.

Refrigerant 2 particularly preferably consists of R32 and R125. In other words, it is particularly preferable for Refrigerant 2 that the total concentration of R32 and R125 in the entire Refrigerant 2 is 100 mass%.

When Refrigerant 2 consists of R32 and R125, R32 is preferably present in an amount of 60.5 to 62.5 mass%, and R125 is preferably present in an amount of 37.5 to 39.5 mass%, based on the total mass of R32 and R125. In this case, Refrigerant 2 has various characteristics, i.e., (1) it has a low GWP (AR4) (1800 or less), (2) it is non-flammable, and (3) when used as an alternative refrigerant for R410A, it has a refrigerating capacity and COP that are equivalent to those of R410A.

When Refrigerant 2 consists of R32 and R125, R32 is more preferably present in an amount of 61 to 62.5 mass%, and R125 is more preferably present in an amount of 37.5 to 39 mass%, based on the total mass of R32 and R125. In this case, Refrigerant A has a GWP (AR4) of 1800 or less, is non-flammable, and has a COP equivalent to that of R410A and a refrigerating capacity superior to that of R410A.

When Refrigerant 2 consists of R32 and R125, R32 is even more preferably present in an amount of 61.5 to 62.5 mass%, and R125 is even more preferably present in an amount of 37.5 to 38.5 mass%, based on the total mass of R32 and R125. In this case, Refrigerant A has a GWP (AR4) of 1800 or less, is non-flammable, and has a COP equivalent to that of R410A and a refrigerating capacity superior to that of R410A.

Since Refrigerant 2 is non-flammable (the ASHRAE flammability classification according to the US ANSI/ASHRAE Standard 34-2013 being Class 1), as with R410A, it is safer and has a wider usable range than flammable refrigerants.

1.1.3 Embodiment 3: Refrigerant 3 (R32/R125/R1234yf)

Refrigerant 3 comprises R32, R125, and R1234yf as essential components. Hereinafter, R32, R125, and R1234yf are also referred to as "the three components" in this section.

The total concentration of the three components in the entire Refrigerant 3 is 99.5 mass% or more. In other words, Refrigerant 3 comprises the three components in amounts such that the sum of the concentrations thereof is 99.5 mass% or more.

In Refrigerant 3, the mass ratio of the three components in a triangle composition diagram having the three components as vertices falls within a region surrounded by a quadrilateral having, as vertices, the following four points:

    point A (R32/R125/R1234yf = 62.2/36.8/1.0 mass%),
    point B (R32/R125/R1234yf = 36.5/30.0/33.5 mass%),
    point C (R32/R125/R1234yf = 26.2/57.5/16.3 mass%), and
    point D (R32/R125/R1234yf = 45.8/53.2/1.0 mass%).

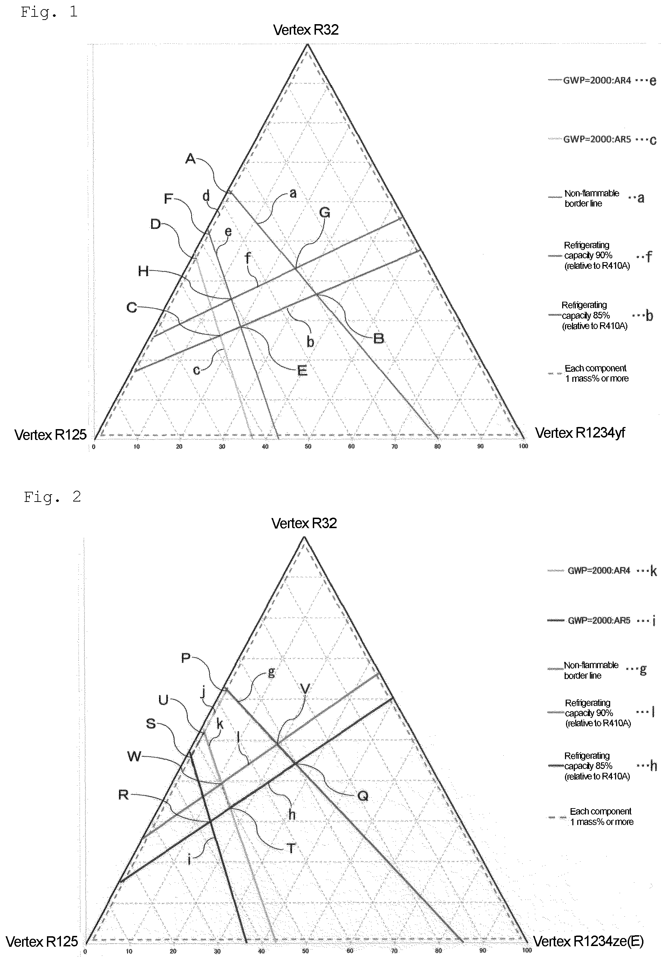

In this section, the triangle composition diagram having the three components as vertices refers to a ternary composition diagram having the above three components (R32, R125, and R1234yf) as vertices, in which the sum of the concentrations of R32, R125, and R1234yf is 100 mass%, as shown in Fig. 1.

Due to this structure, Refrigerant 3 has various characteristics, i.e., (1) it has a low GWP (AR5) (2000 or less), (2) it is non-flammable, and (3) when used as an alternative refrigerant for R410A, it has a refrigerating capacity and COP that are equivalent to those of R410A. Since Refrigerant 3 is non-flammable, as with R410A, it is safer and has a wider usable range than flammable refrigerants.

Straight line a passing through two points A and B is a non-flammable border line. In the region of the triangle composition diagram on the vertex R125 side with respect to straight line a, the mixed refrigerant of the three components is non-flammable.

Straight line b passing through two points B and C shows the mass ratio in which the refrigerating capacity is 85% relative to R410A. In the region of the triangle composition diagram on the vertex R32 side with respect to straight line b, the mixed refrigerant of the three components has a refrigerating capacity of more than 85% relative to R410A.

Straight line c passing through two points C and D shows the mass ratio in which the GWP (AR5) is 2000. In the region of the triangle composition diagram on the vertex R32 side and vertex R1234yf side with respect to straight line c, the mixed refrigerant of the three components has a GWP (AR5) of less than 2000.

Straight line d passing through two points A and D shows the mass ratio in which the concentration (mass%) of R1234yf is 1 mass%. In the region of the triangle composition diagram on the vertex R1234yf side with respect to straight line d, the mixed refrigerant of the three components has a R1234yf concentration of more than 1 mass%.

In the mass ratio falling within a region surrounded by a quadrilateral having four points A, B, C, and D as vertices (ABCD region), Refrigerant 3, which is a ternary mixed refrigerant of R32, R125, and R1234yf, has a GWP (AR5) of 2000 or less, is non-flammable, and has a refrigerating capacity of 85% or more relative to R410A.

In Refrigerant 3, the mass ratio of the three components in a triangle composition diagram having the three components as vertices preferably falls within a region surrounded by a quadrilateral having, as vertices, the following four points:

point A (R32/R125/R1234yf = 62.2/36.8/1.0 mass%),
point B (R32/R125/R1234yf = 36.5/30.0/33.5 mass%),
point E (R32/R125/R1234yf = 28.3/51.6/20.1 mass%), and
point F (R32/R125/R1234yf = 51.9/47.1/1.0 mass%).

The triangle composition diagram having the three components as vertices is as described above.

Straight line a passing through two points A and B is as described above.

Point E is on straight line b passing through two points B and C. Straight line b is as described above.

Straight line e passing through two points E and F shows the mass ratio in which the GWP (AR4) is 2000. In the region of the triangle composition diagram on the vertex R32 side and vertex R1234yf side with respect to straight line e, the mixed refrigerant of the three components has a GWP (AR4) of less than 2000. Point E is the intersection of straight line b and straight line e.

Point F is on straight line d passing through two points A and D. Straight line d is as described above. Point F is the intersection of straight line d and straight line e.

In the mass ratio falling within a region surrounded by a quadrilateral having four points A, B, E, and F as vertices (ABEF region), Refrigerant 3, which is a ternary mixed refrigerant of R32, R125, and R1234yf, has a GWP (AR4) of 2000 or less, is non-flammable, and has a refrigerating capacity of 85% or more relative to R410A.

In Refrigerant 3, the mass ratio of the three components in a triangle composition diagram having the three components as vertices preferably falls within a region surrounded by a quadrilateral having, as vertices, the following four points:

point A (R32/R125/R1234yf = 62.2/36.8/1.0 mass%),
point G (R32/R125/R1234yf = 35.4/50.3/14.3 mass%),
point H (R32/R125/R1234yf = 43.0/31.7/25.3 mass%), and
point F (R32/R125/R1234yf = 51.9/47.1/1.0 mass%).

The triangle composition diagram having the three components as vertices is as described above.

Point G is on straight line a passing through two points A and B. Straight line a is as described above.

Straight line f passing through two points G and H shows the mass ratio in which the refrigerating capacity is 90% relative to R410A. In the region of the triangle composition diagram on the vertex R32 side with respect to straight line f, the mixed refrigerant of the three components has a refrigerating capacity of more than 90% relative to R410A. Point G is the intersection of straight line a and straight line f.

Point H is on straight line e passing through two points E and F. Straight line e is as described above. Point H is the intersection of straight line e and straight line f.

Point F is on straight line d passing through two points A and D. Straight line d is as described above. Point F is the intersection of straight line d and straight line e.

In the mass ratio falling within a region surrounded by a quadrilateral having four points A, G, H, and F as vertices (AGHF region), Refrigerant 3, which is a ternary mixed refrigerant of R32, R125, and R1234yf, has a GWP (AR4) of 2000 or less, is non-flammable, and has a refrigerating capacity of 90% or more relative to R410A.

Refrigerant 3 comprises R32, R125, and R1234yf in amounts such that the sum of the concentrations thereof is 99.5 mass% or more. In particular, the total amount of R32, R125, and R1234yf in the entire Refrigerant 3 is preferably 99.7 mass% or more, more preferably 99.8 mass% or more, and even more preferably 99.9 mass% or more.

Refrigerant 3 may further comprise other refrigerants, in addition to R32, R125, and R1234yf, within a range in which the above characteristics are not impaired. In this case, the content of other refrigerants in the entire Refrigerant 3 is preferably 0.5 mass% or less, more preferably 0.3 mass% or less, even more preferably 0.2 mass% or less, and particularly preferably 0.1 mass% or less. Other refrigerants are not limited, and can be selected from a wide range of known refrigerants that are widely used in this field. Refrigerant 3 may comprise a single other refrigerant, or two or more other refrigerants.

Refrigerant 3 particularly preferably consists of R32, R125, and R1234yf. In other words, it is particularly preferable for Refrigerant 3 that the total concentration of R32, R125, and R1234yf in the entire Refrigerant 3 is 100 mass%.

When Refrigerant 3 consists of R32, R125, and R1234yf, the mass ratio of the three components in a triangle composition diagram having the three components as vertices preferably falls within a region surrounded by a quadrilateral having, as vertices, the following four points:

> point A (R32/R125/R1234yf = 62.2/36.8/1.0 mass%),
> point B (R32/R125/R1234yf = 36.5/30.0/33.5 mass%),
> point C (R32/R125/R1234yf = 26.2/57.5/16.3 mass%), and
> point D (R32/R125/R1234yf = 45.8/53.2/1.0 mass%).

In this case, in the mass ratio falling within a region surrounded by a quadrilateral having four points A, B, C, and D as vertices (ABCD region), Refrigerant 3, which is a ternary mixed refrigerant of R32, R125, and R1234yf, has a GWP (AR5) of 2000 or less, is non-flammable, and has a refrigerating capacity of 85% or more relative to R410A.

When Refrigerant 3 consists of R32, R125, and R1234yf, the mass ratio of the three components in a triangle composition diagram having the three components as vertices more preferably falls within a region surrounded by a quadrilateral having, as vertices, the following four points:

> point A (R32/R125/R1234yf = 62.2/36.8/1.0 mass%),
> point B (R32/R125/R1234yf = 36.5/30.0/33.5 mass%),
> point E (R32/R125/R1234yf = 28.3/51.6/20.1 mass%), and
> point F (R32/R125/R1234yf = 51.9/47.1/1.0 mass%).

In this case, in the mass ratio falling within a region surrounded by a quadrilateral having four points A, B, E, and F as vertices (ABEF region), Refrigerant 3, which is a ternary mixed refrigerant of R32, R125, and R1234yf, has a GWP (AR4) of 2000 or less, is non-flammable, and has a refrigerating capacity of 85% or more relative to R410A.

When Refrigerant 3 consists of R32, R125, and R1234yf, the mass ratio of the three components in a triangle composition diagram having the three components as vertices even more preferably falls within a region surrounded by a quadrilateral having, as vertices, the following four points:

> point A (R32/R125/R1234yf = 62.2/36.8/1.0 mass%),
> point G (R32/R125/R1234yf = 35.4/50.3/14.3 mass%),
> point H (R32/R125/R1234yf = 43.0/31.7/25.3 mass%), and
> point F (R32/R125/R1234yf = 51.9/47.1/1.0 mass%).

In this case, in the mass ratio falling within a region surrounded by a quadrilateral having four points A, G, H, and F as vertices (AGHF region), Refrigerant 3, which is a ternary mixed refrigerant of R32, R125, and R1234yf, has a GWP (AR4) of 2000 or less, is non-flammable, and has a refrigerating capacity of 90% or more relative to R410A.

1.1.4 Embodiment 4: Refrigerant 4 (R32/R125/R1234ze(E))

Refrigerant 4 comprises R32, R125, and R1234ze(E) as essential components. Hereinafter, R32, R125, and R1234ze(E) are also referred to as "the three components" in this section.

The total concentration of the three components in the entire Refrigerant 4 is 99.5 mass% or more. In other words, Refrigerant 4 comprises the three components in amounts such that the sum of the concentrations thereof is 99.5 mass% or more.

In Refrigerant 4, the mass ratio of the three components in a triangle composition diagram having the three components as vertices falls within a region surrounded by a quadrilateral having, as vertices, the following four points:

> point P (R32/R125/R1234ze(E) = 62.2/36.8/1.0 mass%),
> point Q (R32/R125/R1234ze(E) = 44.0/30.3/25.7 mass%),
> point R (R32/R125/R1234ze(E) = 29.9/56.7/13.4 mass%), and
> point S (R32/R125/R1234ze(E) = 45.8/53.2/1.0 mass%).

In this section, the triangle composition diagram having the three components as vertices refers to a ternary composition diagram having the three components (R32, R125, and R1234ze(E)) as vertices, in which the sum of the concentrations R32, R125, and R1234ze(E) is 100 mass%, as shown in Fig. 2.

Due to this structure, Refrigerant 4 has various characteristics, i.e., (1) it has a low GWP (AR5) (2000 or less), (2) it is non-flammable, and (3) when used as an alternative refrigerant for R410A, it has a refrigerating capacity and COP that are equivalent to those of R410A. Since Refrigerant 4 is non-flammable, as with R410A, it is safer and has a wider usable range than flammable refrigerants.

Straight line g passing through two points P and Q is a non-flammable border line. In the region of the triangle composition diagram on the vertex R125 side with respect to straight line g, the mixed refrigerant of the three components is non-flammable.

Straight line h passing through two points Q and R is a straight line showing the mass ratio in which the refrigerating capacity is 85% relative to R410A. In the region of the triangle composition diagram on the vertex R32 side with respect to straight line h, the mixed refrigerant of the three components has a refrigerating capacity of more than 85% relative to R410A.

Straight line i passing through two points R and S shows the mass ratio in which the GWP (AR5) is 2000. In the region of the triangle composition diagram on the vertex R32 side and vertex R1234ze(E) side with respect to straight line i, the mixed refrigerant of the three components has a GWP (AR5) of less than 2000.

Straight line j passing through two points S and P shows the mass ratio in which the concentration (mass%) of R1234ze(E) is 1 mass%. In the region of the triangle composition diagram on the vertex R1234ze(E) side with respect to straight line j, the mixed refrigerant of the three components has a R1234ze(E) concentration of more than 1 mass%.

In the mass ratio falling within a region surrounded by a quadrilateral having four points P, Q, R, and S as vertices (PQRS region), Refrigerant 4, which is a ternary mixed refrigerant of R32, R125, and R1234ze(E), has a GWP (AR5) of 2000 or less, is non-flammable, and has a refrigerating capacity of 85% or more relative to R410A.

In Refrigerant 4, the mass ratio of the three components in a triangle composition diagram having the three components as vertices preferably falls within a region surrounded by a quadrilateral having, as vertices, the following four points:

> point P (R32/R125/R1234ze(E) = 62.2/36.8/1.0 mass%),
> point Q (R32/R125/R1234ze(E) = 44.0/30.3/25.7 mass%),
> point T (R32/R125/R1234ze(E) = 33.4/50.6/16.0 mass%), and
> point U (R32/R125/R1234ze(E) = 51.9/47.1/1.0 mass%).

The triangle composition diagram having the three components as vertices is as described above.

Straight line g passing through two points P and Q is as described above.

Point T is on straight line h passing through two points Q and R. Straight line h is as described above.

Straight line k passing through two points T and U shows the mass ratio in which the GWP (AR4) is 2000. In the region of the triangle composition diagram on the vertex R32 side and vertex R1234ze(E) side with respect to straight line k, the mixed refrigerant of the three components has a GWP (AR4) of less than 2000. Point T is the intersection of straight line h and straight line k.

Point U is on straight line j passing through two points S and P. Straight line j is as described above.

In the mass ratio falling within a region surrounded by a quadrilateral having four points P, Q, T, and U as vertices (PQTU region), Refrigerant 4, which is a ternary mixed refrigerant of R32, R125, and R1234ze(E), has a GWP (AR4) of 2000 or less, is non-flammable, and has a refrigerating capacity of 85% or more relative to R410A.

In Refrigerant 4, the mass ratio of the three components in a triangle composition diagram having the three components as vertices preferably falls within a region surrounded by a quadrilateral having, as vertices, the following four points:

> point P (R32/R125/R1234ze(E) = 62.2/36.8/1.0 mass%),
> point V (R32/R125/R1234ze(E) = 49.0/32.0/19.0 mass%),
> point W (R32/R125/R1234ze(E) = 39.2/49.5/11.3 mass%), and

point U (R32/R125/R1234ze(E) = 51.9/47.1/1.0 mass%).

The triangle composition diagram having the three components as vertices is as described above.

Point V is on straight line g passing through two points P and Q. Straight line g is as described above. Point V is the intersection of straight line g and straight line l passing through two points V and R.

Point W is on straight line l passing through two points V and R. Straight line l shows the mass ratio in which the refrigerating capacity is 90% relative to R410A. In the region of the triangle composition diagram on the vertex R32 side with respect to straight line l, the mixed refrigerant of the three components has a refrigerating capacity of more than 90% relative to R410A. Point W is the intersection of straight line l and straight line k passing through two points T and U.

Point U is on straight line j passing through two points S and P. Straight line j is as described above. Point U is the intersection of straight line j and straight line k.

In the mass ratio falling within a region surrounded by a quadrilateral having four points P, V, W, and U as vertices (PVWU region), Refrigerant 4, which is a ternary mixed refrigerant of R32, R125, and R1234ze(E), has a GWP (AR4) of 2000 or less, is non-flammable, and has a refrigerating capacity of 90% or more relative to R410A.

Refrigerant 4 comprises R32, R125, and R1234ze(E) in amounts such that the sum of the concentrations thereof is 99.5 mass% or more. In particular, the total amount of R32, R125, and R1234ze(E) in the entire Refrigerant 4 is preferably 99.7 mass% or more, more preferably 99.8 mass% or more, and even more preferably 99.9 mass% or more.

Refrigerant 4 may further comprise other refrigerants, in addition to R32, R125, and R1234ze(E), within a range in which the above characteristics are not impaired. In this case, the content of other refrigerants in the entire Refrigerant 4 is preferably 0.5 mass% or less, more preferably 0.3 mass% or less, even more preferably 0.2 mass% or less, and particularly preferably 0.1 mass% or less. Other refrigerants are not limited, and can be selected from a wide range of known refrigerants that are widely used in this field. Refrigerant 4 may comprise a single other refrigerant, or two or more other refrigerants.

Refrigerant 4 particularly preferably consists of R32, R125, and R1234ze(E). In other words, it is particularly preferable for Refrigerant 4 that the total concentration of R32, R125, and R1234ze(E) in the entire Refrigerant 4 is 100 mass%.

When Refrigerant 4 consists of R32, R125, and R1234ze(E), the mass ratio of the three components in a triangle composition diagram having the three components as vertices preferably falls within a region surrounded by a quadrilateral having, as vertices, the following four points:

point P (R32/R125/R1234ze(E) = 62.2/36.8/1.0 mass%),
point Q (R32/R125/R1234ze(E) = 44.0/30.3/25.7 mass%),
point R (R32/R125/R1234ze(E) = 29.9/56.7/13.4 mass%), and
point S (R32/R125/R1234ze(E) = 45.8/53.2/1.0 mass%).

In this case, in the mass ratio falling within a region surrounded by a quadrilateral having four points P, Q, R, and S as vertices (ABCD region), Refrigerant 4, which is a ternary mixed refrigerant of R32, R125, and R1234ze(E), has a GWP (AR5) of 2000 or less, is non-flammable, and has a refrigerating capacity of 85% or more relative to R410A.

When Refrigerant 4 consists of R32, R125, and R1234ze(E), the mass ratio of the three components in a triangle composition diagram having the three components as vertices more preferably falls within a region surrounded by a quadrilateral having, as vertices, the following four points:

point P (R32/R125/R1234ze(E) = 62.2/36.8/1.0 mass%),
point Q (R32/R125/R1234ze(E) = 44.0/30.3/25.7 mass%),
point T (R32/R125/R1234ze(E) = 33.4/50.6/16.0 mass%), and
point U (R32/R125/R1234ze(E) = 51.9/47.1/1.0 mass%).

In this case, in the mass ratio falling within a region surrounded by a quadrilateral having four points P, Q, T, and U as vertices (PQTU region), Refrigerant 4, which is a ternary mixed refrigerant of R32, R125, and R1234ze(E), has a GWP (AR4) of 2000 or less, is non-flammable, and has a refrigerating capacity of 85% or more relative to R410A.

When Refrigerant 4 consists of R32, R125, and R1234ze(E), the mass ratio of the three components in a triangle composition diagram having the three components as vertices even more preferably falls within a region surrounded by a quadrilateral having, as vertices, the following four points:

point P (R32/R125/R1234ze(E) = 62.2/36.8/1.0 mass%),
point V (R32/R125/R1234ze(E) = 49.0/32.0/19.0 mass%),
point W (R32/R125/R1234ze(E) = 39.2/49.5/11.3 mass%), and

point U (R32/R125/R1234ze(E) = 51.9/47.1/1.0 mass%).

In this case, in the mass ratio falling within a region surrounded by a quadrilateral having four points P, V, W, and U as vertices (PVWU region), Refrigerant 4, which is a ternary mixed refrigerant of R32, R125, and R1234ze(E), has a GWP (AR4) of 2000 or less, is non-flammable, and has a refrigerating capacity of 90% or more relative to R410A.

1.2. Use

Since Refrigerant 1, Refrigerant 2, Refrigerant 3, and Refrigerant 4 each have a refrigerating capacity equivalent to that of currently used R410A, and have a low GWP (2000 or less), they are suitable for use as alternative refrigerants for R410A.
Further, the compositions comprising these refrigerants according to the present disclosure can be widely used, as working fluids, for existing refrigerants, for example, in 1) a refrigeration method comprising operating a refrigeration cycle, and 2) a method for operating a refrigeration apparatus that operates a refrigeration cycle.
The refrigeration cycle herein means performing energy conversion by circulating in the refrigeration apparatus the composition according to the present disclosure in the state of the single refrigerant (Refrigerant 1, 2, 3, or 4), or in the state of a refrigerant composition or a refrigeration oil-containing working fluid explained below, through a compressor.
Therefore, the present disclosure also includes an invention of using the composition according to the present disclosure in a refrigeration method, an invention of using the composition according to the present disclosure in a method for operating a refrigeration apparatus, and further a refrigeration apparatus having the composition according to the present disclosure.
Although the applicable refrigeration apparatus is not limited, examples include air-conditioning systems, refrigerators, freezers, water coolers, ice makers, refrigerated showcases, freezing showcases, freezing and refrigerating units, refrigerating machines for freezing and refrigerating warehouses, air-conditioning systems for vehicles, turbo refrigerating machines, and screw refrigerating machines.

2. Refrigerant Composition

The refrigerant composition according to the present disclosure at least comprises the refrigerant according to the present disclosure and can be used for the same applications as the refrigerant according to the present disclosure.
Further, the refrigerant composition according to the present disclosure can be mixed with at least a refrigeration oil to thereby obtain a working fluid for a refrigeration apparatus.
The refrigerant composition according to the present disclosure further comprises at least one other component in addition to the refrigerant according to the present disclosure. The refrigerant composition according to the present disclosure may optionally comprise at least one of the other components described below.
As described above, when the refrigerant composition according to the present disclosure is used as a working fluid for a refrigeration apparatus, it is usually mixed with at least a refrigeration oil for use.
Preferably, the refrigerant composition according to the present disclosure is substantially free from a refrigeration oil. Specifically, in the refrigerant composition according to the present disclosure, the amount of refrigeration oil relative to the entire refrigerant composition is preferably 0 to 1 mass%, more preferably 0 to 0.5 mass%, even more preferably 0 to 0.25 mass%, and particularly preferably 0 to 0.1 mass%.

2.1 Water

The refrigerant composition according to the present disclosure may comprise a small amount of water.
The water content in the refrigerant composition is preferably 0 to 0.1 mass%, more preferably 0 to 0.075 mass%, even more preferably 0 to 0.05 mass%, and particularly preferably 0 to 0.025 mass%, relative to the entire refrigerant.
A small amount of water contained in the refrigerant composition stabilizes double bonds in the molecules of unsaturated fluorocarbon-based compounds that can be present in the refrigerant; and makes it less likely that the unsaturated fluorocarbon-based compounds will be oxidized, thus increasing the stability of the refrigerant composition.

2.2 Tracer

A tracer is added to the refrigerant composition according to the present disclosure at a detectable concentration so that when the composition has been diluted, contaminated, or undergone some other changes, the tracer can trace the changes.
The refrigerant composition according to the present disclosure may comprise a single tracer, or two or more tracers.

The tracer is not limited, and can be suitably selected from typically used tracers. Preferably, a compound that cannot become an impurity inevitably mixed into the refrigerant according to the present disclosure can be selected as a tracer.

Examples of tracers include hydrofluorocarbons, hydrochlorofluorocarbons, chlorofluorocarbons, hydrochlorocarbons, fluorocarbons, deuterated hydrocarbons, deuterated hydrofluorocarbons, perfluorocarbons, fluoroethers, brominated compounds, iodinated compounds, alcohols, aldehydes, ketones, and nitrous oxides ($N_2O$). Of these, hydrofluorocarbons, hydrochlorofluorocarbons, chlorofluorocarbons, hydrochlorocarbons, fluorocarbons, and fluoroethers are preferred.

Specifically, the following compounds (hereinbelow sometimes referred to as "tracer compounds") are more preferred as tracers.

HCC-40 (chloromethane, $CH_3Cl$)

HFC-41 (fluoromethane, $CH_3F$)

HFC-161 (fluoroethane, $CH_3CH_2F$)

HFC-245fa (1,1,1,3,3-pentafluoropropane, $CF_3CH_2CHF_2$)

HFC-236fa (1,1,1,3,3,3-hexafluoropropane, $CF_3CH_2CF_3$)

HFC-236ea (1,1,1,2,3,3-hexafluoropropane, $CF_3CHFCHF_2$)

HCFC-22 (chlorodifluoromethane, $CHClF_2$)

HCFC-31 (chlorofluoromethane, $CH_2ClF$)

CFC-1113 (chlorotrifluoroethylene, $CF_2=CClF$)

HFE-125 (trifluoromethyl-difluoromethyl ether, $CF_3OCHF_2$)

HFE-134a (trifluoromethyl-fluoromethyl ether, $CF_3OCH_2F$)

HFE-143a (trifluoromethyl-methyl ether, $CF_3OCH_3$)

HFE-227ea (trifluoromethyl-tetrafluoroethyl ether, $CF_3OCHFCF_3$)

HFE-236fa (trifluoromethyl-trifluoroethyl ether, $CF_3OCH_2CF_3$).

The tracer compound can be present in the refrigerant composition in a total concentration of 10 parts per million (ppm) by mass to 1000 ppm. The tracer compound is preferably present in the refrigerant composition in a total concentration of 30 ppm to 500 ppm, more preferably 50 ppm to 300 ppm, even more preferably 75 ppm to 250 ppm, and particularly preferably 100 ppm to 200 ppm.

## 2.3 Ultraviolet Fluorescent Dye

The refrigerant composition according to the present disclosure may comprise a single ultraviolet fluorescent dye, or two or more ultraviolet fluorescent dyes.

The ultraviolet fluorescent dye is not limited, and can be suitably selected from typically used ultraviolet fluorescent dyes.

Examples of ultraviolet fluorescent dyes include naphthalimide, coumarin, anthracene, phenanthrene, xanthene, thioxanthene, naphthoxanthene, fluorescein, and derivatives thereof. Of these, naphthalimide and coumarin are preferred.

## 2.4 Stabilizer

The refrigerant composition according to the present disclosure may comprise a single stabilizer, or two or more stabilizers.

The stabilizer is not limited, and can be suitably selected from typically used stabilizers.

Examples of stabilizers include nitro compounds, ethers, and amines.

Examples of nitro compounds include aliphatic nitro compounds, such as nitromethane and nitroethane, and aromatic nitro compounds, such as nitrobenzene and nitrostyrene.

Examples of ethers include 1,4-dioxane.

Examples of amines include 2,2,3,3,3-pentafluoropropylamine and diphenylamine.

Examples of stabilizers also include butylhydroxyxylene and benzotriazole in addition to the nitro compounds, ethers, and amines mentioned above.

The amount of the stabilizer is not limited. The amount of the stabilizer is usually 0.01 to 5 mass%, preferably 0.05 to 3 mass%, more preferably 0.1 to 2 mass%, even more preferably 0.25 to 1.5 mass%, and particularly preferably 0.5 to 1 mass%, relative to the entire refrigerant.

The stability of the refrigerant composition according to the present disclosure can be evaluated by a commonly used method without limitation. Examples of such methods include an evaluation method using the amount of free fluorine ions as an index according to ASHRAE Standard 97-2007, and the like. There is, for example, another evaluation method using the total acid number as an index. This method can be performed, for example, according to ASTM D 974-06.

2.5 Polymerization Inhibitor

The refrigerant composition according to the present disclosure may comprise a single polymerization inhibitor, or two or more polymerization inhibitors.

The polymerization inhibitor is not limited, and can be suitably selected from typically used polymerization inhibitors.

Examples of polymerization inhibitors include 4-methoxy-1-naphthol, hydroquinone, hydroquinone methyl ether, dimethyl-t-butylphenol, 2,6-di-tert-butyl-p-cresol, and benzotriazole.

The amount of the polymerization inhibitor is not limited. The amount of the polymerization inhibitor is usually 0.01 to 5 mass%, preferably 0.05 to 3 mass%, more preferably 0.1 to 2 mass%, even more preferably 0.25 to 1.5 mass%, and particularly preferably 0.5 to 1 mass%, relative to the entire refrigerant.

2.6 Other Components That Can Be Contained in Refrigerant Composition

The refrigerant composition according to the present disclosure can also contain the following components.

For example, fluorinated hydrocarbons that are different from the refrigerants mentioned above can be contained. Examples of fluorinated hydrocarbons used as other components are not limited. At least one fluorinated hydrocarbon selected from the group consisting of HCFC-1122, HCFC-124, and CFC-1113 can be used.

As another component, at least one halogenated organic compound represented by formula (A): $C_mH_nX_p$, wherein each X is independently fluorine, chlorine, or bromine; m is 1 or 2; $2m+2 \geq n+p$; and $p \geq 1$ can be contained. The halogenated organic compound is not limited, and preferable examples include difluorochloromethane, chloromethane, 2-chloro-1,1,1,2,2-pentafluoroethane, 2-chloro-1,1,1,2-tetrafluoroethane, 2-chloro-1,1-difluoroethylene, and trifluoroethylene.

As another component, at least one organic compound represented by formula (B): $C_mH_nX_p$, wherein each X is independently an atom other than a halogen atom; m is 1 or 2; $2m+2 \geq n+p$; and $p \geq 1$ can be contained. The organic compound is not limited, and preferable examples include propane and isobutane.

The amounts of the fluorinated hydrocarbon, the halogenated organic compound represented by formula (A), and the organic compound represented by formula (B) are not limited. The total amount of these is preferably 0.5 mass% or less, more preferably 0.3 mass% or less, and particularly preferably 0.1 mass% or less, relative to the total amount of the refrigerant composition.

3. Refrigeration Oil-Containing Working Fluid

The refrigeration oil-containing working fluid according to the present disclosure at least comprises the refrigerant or refrigerant composition according to the present disclosure, and a refrigeration oil, and is used as a working fluid in a refrigeration apparatus. Specifically, the refrigeration oil-containing working fluid according to the present disclosure can be obtained by mixing together the refrigerant or refrigerant composition with a refrigeration oil used in a compressor of a refrigeration apparatus.

The amount of the refrigeration oil is not limited, and is usually 10 to 50 mass%, preferably 12.5 to 45 mass%, more preferably 15 to 40 mass%, even more preferably 17.5 to 35 mass%, and particularly preferably 20 to 30 mass%, relative to the entire refrigeration oil-containing working fluid.

3.1 Refrigeration Oil

The composition according to the present disclosure may comprise a single refrigeration oil, or two or more refrigeration oils.

The refrigeration oil is not limited, and can be suitably selected from typically used refrigeration oils. In this case, refrigeration oils that are superior in increasing action on the miscibility with the mixture of the refrigerants according to the present disclosure (mixed refrigerant according to the present disclosure) and stability of the mixed refrigerant, for example, are suitably selected as necessary.

The base oil of the refrigeration oil is preferably, for example, at least one member selected from the group consisting of polyalkylene glycol (PAG), polyol ester (POE), and polyvinyl ether (PVE).

The refrigeration oil may further comprise an additive in addition to the base oil.

The additive may be at least one member selected from the group consisting of antioxidants, extreme-pressure agents, acid scavengers, oxygen scavengers, copper deactivators, anticorrosive agents, oily agents, and antifoaming agents.

A refrigeration oil with a kinematic viscosity of 5 to 400 cSt at 40°C is preferable from the standpoint of lubrication.

The refrigeration oil-containing working fluid according to the present disclosure may further optionally comprise at least one additive. Examples of additives include the compatibilizing agents described below.

3.2. Compatibilizing Agent

The refrigeration oil-containing working fluid according to the present disclosure may comprise a single compatibilizing agent, or two or more compatibilizing agents.

The compatibilizing agent is not limited, and can be suitably selected from typically used compatibilizing agents.

Examples of compatibilizing agents include polyoxyalkylene glycol ethers, amides, nitriles, ketones, chlorocarbons, esters, lactones, aryl ethers, fluoroethers, and 1,1,1-trifluoroalkane. Of these, a polyoxyalkylene glycol ether is preferred.

Examples

The present disclosure is described in detail below with reference to Examples. However, the present disclosure is not limited to the Examples.

Examples 1 to 25, Comparative Examples 1 to 7, and Reference Example 1

The GWP of each of the mixed refrigerants shown in the Examples, Comparative Examples, and Reference Example was evaluated based on the values stated in the IPCC, fourth and fifth reports.

The GWP of each of R410A (R32/R125 = 50/50 mass%), R32 (R32 = 100 mass%), R452B (R32/R125/R1234yf = 67/7/26 mass%), R454B (R32/R1234yf = 68.9/31.1 mass%), and R447B (R32/R125/R1234ze(E) = 68/8/24 mass%) was also evaluated based on the values stated in the IPCC, fourth or fifth report.

The COP and refrigerating capacity of each of the mixed refrigerants shown in the Examples and Comparative Examples, and the COP and refrigerating capacity of each of R410A, R32, R452B, R454B, and R447B were determined by performing refrigeration cycle theoretical calculations for the mixed refrigerants using the National Institute of Science and Technology (NIST), Reference Fluid Thermodynamic and Transport Properties Database (Refprop 9.0) under the following conditions.

| | |
|---|---|
| Evaporation temperature | 45°C |
| Condensation temperature | 5°C |
| Superheating temperature | 5 K |
| Supercooling temperature | 5 K |
| Compressor efficiency | 70% |

Tables 1 to 3 below show the GWP, COP, and refrigerating capacity calculated based on these results. In Tables 1 to 3, the COP ratio and the refrigerating capacity ratio refer to ratios (%) relative to R410A.

The coefficient of performance (COP) was calculated according to the following equation.

```
COP = (refrigerating capacity or heating capacity)/amount of
electrical power consumed
```

The flammability of the mixed refrigerant was determined by specifying the fractionation of the mixed refrigerant to the WCF concentration and measuring the burning rate according to ANSI/ASHRAE Standard 34-2013. The one with a burning rate of 0 cm/s to 10 cm/s was classified as Class 2L (slightly flammable), and the one with no flame propagation was classified as Class 1 (non-flammable). In Table 1 below, the ASHRAE flammability classification shows the results based on these criteria.

The burning rate test was performed as follows. First, a mixed refrigerant having a purity of 99.5% or more was used, and the mixed refrigerant was deaerated by repeating a cycle of freezing, pumping, and thawing until no trace of air was observed on the vacuum gauge. The burning rate was measured by a closed method. The initial temperature was the ambient temperature. The ignition was performed by generating an electrical spark between the electrodes in the center of the sample cell. The duration of the discharge was 1.0 to 9.9 ms, and the ignition energy was typically about 0.1 to 1.0 J. The spread of the flame was visualized by using a schlieren photograph. A cylindrical container (inner diameter: 155 mm, length: 198 mm) having two acrylic windows that transmit light was used as a sample cell, and a xenon lamp was used as a light source. The schlieren image of the flame was recorded using a high-speed digital video camera at a frame speed of 600 fps, and stored in a PC.

The flammable range of the mixed refrigerant was measured using a measurement device according to ASTM E681-09 (see Fig. 3).

More specifically, a 12-L spherical glass flask was used so that the combustion state could be visually observed and photographically recorded. When excessive pressure was generated by combustion in the glass flask, gas was allowed to escape from the upper lid. Ignition was achieved by electric discharge from electrodes disposed at one-third the distance from the bottom. The test conditions of Examples 1 to 3, Comparative Examples 1 and 2, and Reference Example 1 are as follows.

Test conditions

Test vessel: 280 mm φ spherical (internal volume: 12 liters)
Test temperature: 60°C ±3°C
Pressure: 101.3 kPa ±0.7 kPa
Water (high-temperature and high-humidity conditions): 0.0187 g ±0.0005 g (water content at a relative humidity of 50% at 36°C) per gram of dry air
Mixing ratio of refrigerant composition/air: 1 vol.% increments ±0.2 vol.%
Mixture of refrigerant composition: ±0.1 mass%
Ignition method: AC discharge, voltage: 15 kV, electric current: 30 mA, neon transformer
Electrode spacing: 6.4 mm (1/4 inch)
Spark: 0.4 seconds ±0.05 seconds

Evaluation criteria:

When the flame spread at an angle of more than 90° from the ignition point, it was evaluated that flame propagation was present (flammable).
When the flame spread at an angle of 90° or less from the ignition point, it was evaluated that flame propagation was absent (non-flammable).

The test conditions of Examples 4 to 25, Comparative Examples 3 to 7, and Reference Example 1 are as follows.

"Flammability test by ASTM method" in Tables 2 and 3 below shows the results based on the criteria described in the following test conditions.

Test conditions

Test vessel: 280 mm φ spherical (internal volume: 12 liters)
Test temperature: 60°C ±3°C
Pressure: 101.3 kPa ±0.7 kPa
Water: 0.0088 g ±0.0005 g (water content at a relative humidity of 50% at 23°C) per gram of dry air
Mixing ratio of refrigerant composition/air: 1 vol.% increments ±0.2 vol.%
Mixture of refrigerant composition: ±0.1 mass%
Ignition method: AC discharge, voltage: 15 kV, electric current: 30 mA, neon transformer
Electrode spacing: 6.4 mm (1/4 inch)
Spark: 0.4 seconds ±0.05 seconds

Evaluation criteria:

When the flame spread at an angle of more than 90° from the ignition point, it was evaluated that flame propagation was present (flammable).
When the flame spread at an angle of 90° or less from the ignition point, it was evaluated that flame propagation was absent (non-flammable).

Table 1

| Item | | Unit | Reference Example 1 (R410A) | Comparative Example 1 (R32) | Example 1 | Example 2 | Example 3 | Comparative Example 2 |
|---|---|---|---|---|---|---|---|---|
| Formulation | R32 | mass% | 50.0 | 100 | 53.5 | 55.5 | 62.5 | 65.0 |
| | R125 | mass% | 50.0 | 0 | 46.5 | 44.5 | 37.5 | 35.0 |
| GWP (AR4) | | - | 2088 | 675 | 1989 | 1932 | 1734 | 1664 |
| Coefficient of performance (COP) relative to R410A | | % | 100 | 102 | 100 | 100 | 101 | 101 |
| Refrigerating capacity relative to R410A | | % | 100 | 110 | 101 | 102 | 103 | 104 |
| ASHRAE flammability classification | | - | Class 1 | Class 2L | Class 1 | Class 1 | Class 1 | Class 2L |
| Flammability under high-temperature and high-humidity conditions | | - | Non-flammable | Flammable | Non-flammable | Non-flammable | Flammable | Flammable |

Table 2

| Item | | Unit | Reference Example 1 (R410A) | Comparative Example 3 (R452B) | Comparative Example 4 (R454B) | Example 4 | Example 5 | Example 6 | Example 7 A | Example 8 B | Example 9 C | Example 10 D | Example 11 E | Example 12 F | Example 13 G | Example 14 H | Comparative Example 5 |
|---|---|---|---|---|---|---|---|---|---|---|---|---|---|---|---|---|---|
| Form ulation | R32 | mass % | 50.0 | 67.0 | 68.9 | 51.7 | 53.4 | 55.1 | 62.2 | 36.5 | 26.2 | 45.8 | 28.3 | 51.9 | 35.4 | 43.0 | 56.8 |
| | R125 | mass % | 50.0 | 7.0 | 31.1 | 45.7 | 41.4 | 37.1 | 36.8 | 30.0 | 57.5 | 53.2 | 51.6 | 47.1 | 50.3 | 31.7 | 32.8 |
| | R1234yf | mass % | 0.0 | 26.0 | 0.0 | 2.6 | 5.2 | 7.8 | 1.0 | 33.5 | 16.3 | 1.0 | 20.1 | 1.0 | 14.3 | 25.3 | 10.4 |
| GWP (AR4) | | - | 2088 | 698 | 466 | 1949 | 1810 | 1671 | 1708 | 1298 | 2190 | 2171 | 1998 | 1999 | 2000 | 1401 | 1532 |
| GWP (AR5) | | - | 1924 | 707 | 467 | 1799 | 1674 | 1549 | 1588 | 1198 | 2000 | 1997 | 1828 | 1844 | 1834 | 1296 | 1424 |
| Coefficient of performance (COP) relative to R410A | | % | 100 | 102 | 102 | 100 | 100 | 101 | 101 | 101 | 99 | 100 | 100 | 101 | 100 | 101 | 101 |
| Refrigerating capacity relative to R410A | | % | 100 | 98 | 97 | 100 | 100 | 99 | 114 | 85 | 85 | 109 | 85 | 111 | 90 | 90 | 99 |
| Flammability test by ASTM method | | - | Non-flammable | Flammable | Flammable | Non-flammable | Non-flammable | Non-flammable | Non-flammable | Non-flammable | Non-flammable | Non-flammable | Non-flammable | Non-flammable | Non-flammable | Non-flammable | Flammable |

Table 3

| Item | | Unit | Reference Example 1 (R410A) | Comparative Example 6 (R447B) | Example 15 | Example 16 | Example 17 | Example 18 P | Example 19 Q | Example 20 R | Example 21 S | Example 22 T | Example 23 U | Example 24 W | Example 25 V | Comparative Example 7 |
|---|---|---|---|---|---|---|---|---|---|---|---|---|---|---|---|---|
| Formulation | R32 | mass % | 50.0 | 68.0 | 51.8 | 53.6 | 55.4 | 62.2 | 44.0 | 29.9 | 45.8 | 33.4 | 51.9 | 39.2 | 49.0 | 57.2 |
| | R125 | mass % | 50.0 | 8.0 | 45.8 | 41.6 | 37.4 | 36.8 | 30.3 | 56.7 | 53.2 | 50.6 | 47.1 | 49.5 | 32.0 | 33.2 |
| | R1234ze (E) | mass % | 0.0 | 24.0 | 2.4 | 4.8 | 7.2 | 1.0 | 25.7 | 13.4 | 1.0 | 16.0 | 1.0 | 11.3 | 19.0 | 9.6 |
| GWP(AR4) | | - | 2088 | 740 | 1953 | 1818 | 1683 | 1708 | 1359 | 2187 | 2171 | 1997 | 1999 | 1998 | 1452 | 1549 |
| GWP(AR5) | | - | 1924 | 714 | 1803 | 1682 | 1561 | 1588 | 1259 | 2000 | 1997 | 1830 | 1844 | 1835 | 1346 | 1440 |
| Coefficient of performance (COP) relative to R410A | | % | 100 | 103 | 100 | 101 | 101 | 101 | 103 | 100 | 100 | 101 | 101 | 101 | 102 | 101 |
| Refrigerating capacity relative to R410A | | % | 100 | 94 | 99 | 99 | 98 | 114 | 85 | 95 | 109 | 85 | 111 | 90 | 90 | 98 |
| Flammability test byASTM method | | - | Non-flammable | Flammable | Non-flammable | Non-flammable | Non-flammable | Non-flammable | Non-flammable | Non-flammable | Non-flammable | Non-flammable | Non-flammable | Non-flammable | Non-flammable | Flammable |

Reference Numerals

1. Supply line
2. Sampling line
3. Thermometer
4. Pressure gauge
5. Electrodes
6. Stirring blade (made of PTFE)
A: Mass ratio with non-flammability, in which the concentration (mass%) of R1234yf is 1 mass%
B: Mass ratio with non-flammability, in which the refrigerating capacity is 85% relative to R410A
C: Mass ratio in which the GWP based on AR5 is 2000, and the refrigerating capacity is 85% relative to R410A
D: Mass ratio in which the GWP based on AR5 is 2000, and the concentration (mass%) of R1234yf is 1 mass%
E: Mass ratio in which the GWP based on AR4 is 2000, and the refrigerating capacity is 85% relative to R410A
F: Mass ratio in which the GWP based on AR4 is 2000, and the concentration (mass%) of R1234yf is 1 mass%
G: Mass ratio with non-flammability, in which the refrigerating capacity is 90% relative to R410A
H: Mass ratio in which the GWP based on AR4 is 2000, and the refrigerating capacity is 90% relative to R410A
a: Non-flammable border line
b: Straight line showing the mass ratio in which the refrigerating capacity is 85% relative to R410A
c: Straight line showing the mass ratio in which the GWP based on AR5 is 2000
d: Straight line showing the mass ratio in which the concentration (mass%) of R1234yf is 1 mass%
e: Straight line showing the mass ratio in which the GWP based on AR4 is 2000
f: Straight line showing the mass ratio in which the refrigerating capacity is 90% relative to R410A
P: Mass ratio with non-flammability, in which the concentration (mass%) of R1234ze(E) is 1 mass%
Q: Mass ratio with non-flammability, in which the refrigerating capacity is 85% relative to R410A
R: Mass ratio in which the GWP based on AR5 is 2000, and the refrigerating capacity is 85% relative to R410A
S: Mass ratio in which the GWP based on AR5 is 2000, and the concentration (mass%) of R1234ze(E) is 1 mass%
T: Mass ratio in which the GWP based on AR4 is 2000, and the refrigerating capacity is 85% relative to R410A
U: Mass ratio in which the GWP based on AR4 is 2000, and the concentration (mass%) of R1234ze(E) is 1 mass%
V: Mass ratio with non-flammability, in which the refrigerating capacity is 90% relative to R410A
W: Mass ratio in which the GWP based on AR4 is 2000, and the refrigerating capacity is 90% relative to R410A
g: Non-flammable border line
h: Straight line showing the mass ratio in which the refrigerating capacity is 85% relative to R410A
i: Straight line showing the mass ratio in which the GWP based on AR5 is 2000
j: Straight line showing the mass ratio in which the concentration (mass%) of R1234ze(E) is 1 mass%
k: Straight line showing the mass ratio in which the GWP based on AR4 is 2000
1: Straight line showing the mass ratio in which the refrigerating capacity is 90% relative to R410A

**Claims**

1. A composition comprising a refrigerant, the refrigerant comprising difluoromethane (R32) and pentafluoroethane (R125),
   wherein the total concentration of R32 and R125 is 99.5 mass% or more, and
   wherein R32 is present in an amount of 53.1 to 56.0 mass%, and R125 is present in an amount of 44.0 to 46.9 mass%, based on the total mass of R32 and R125.

2. A composition comprising a refrigerant, the refrigerant comprising difluoromethane (R32) and pentafluoroethane (R125),
   wherein the total concentration of R32 and R125 is 99.5 mass% or more, and
   wherein R32 is present in an amount of 60.5 to 62.5 mass%, and R125 is present in an amount of 37.5 to 39.5 mass%, based on the total mass of R32 and R125.

3. The composition according to claim 1 or 2, wherein the refrigerant consists of R32 and R125.

4. A composition comprising a refrigerant, the refrigerant comprising difluoromethane (R32), pentafluoroethane (R125), and 2,3,3,3-tetrafluoropropen (R1234yf),

wherein the total concentration of the three components is 99.5 mass% or more, and
wherein the mass ratio of the three components in a triangle composition diagram having the three components as vertices falls within a region surrounded by a quadrilateral having, as vertices, the following four points:

point A (R32/R125/R1234yf = 62.2/36.8/1.0 mass%),
point B (R32/R125/R1234yf = 36.5/30.0/33.5 mass%),
point C (R32/R125/R1234yf = 26.2/57.5/16.3 mass%), and
point D (R32/R125/R1234yf = 45.8/53.2/1.0 mass%).

5. The composition comprising a refrigerant according to claim 4, the refrigerant comprising R32, R125, and R1234yf, wherein the total concentration of the three components is 99.5 mass% or more, and
wherein the mass ratio of the three components in a triangle composition diagram having the three components as vertices falls within a region surrounded by a quadrilateral having, as vertices, the following four points:

point A (R32/R125/R1234yf = 62.2/36.8/1.0 mass%),
point B (R32/R125/R1234yf = 36.5/30.0/33.5 mass%),
point E (R32/R125/R1234yf = 28.3/51.6/20.1 mass%), and
point F (R32/R125/R1234yf = 51.9/47.1/1.0 mass%).

6. The composition comprising a refrigerant according to claim 4 or 5, the refrigerant comprising R32, R125, and R1234yf,
wherein the total concentration of the three components is 99.5 mass% or more, and
wherein the mass ratio of the three components in a triangle composition diagram having the three components as vertices falls within a region surrounded by a quadrilateral having, as vertices, the following four points:

point A (R32/R125/R1234yf = 62.2/36.8/1.0 mass%),
point G (R32/R125/R1234yf = 35.4/50.3/14.3 mass%),
point H (R32/R125/R1234yf = 43.0/31.7/25.3 mass%), and
point F (R32/R125/R1234yf = 51.9/47.1/1.0 mass%).

7. The composition according to any one of claims 4 to 6, wherein the refrigerant consists of R32, R125, and R1234yf.

8. A composition comprising a refrigerant, the refrigerant comprising difluoromethane (R32), pentafluoroethane (R125), and trans-1,3,3,3-tetrafluoropropen (R1234ze(E)),
wherein the total concentration of the three components is 99.5 mass% or more, and
wherein the mass ratio of the three components in a triangle composition diagram having the three components as vertices falls within a region surrounded by a quadrilateral having, as vertices, the following four points:

point P (R32/R125/R1234ze(E) = 62.2/36.8/1.0 mass%),
point Q (R32/R125/R1234ze(E) = 44.0/30.3/25.7 mass%),
point R (R32/R125/R1234ze(E) = 29.9/56.7/13.4 mass%), and
point S (R32/R125/R1234ze(E) = 45.8/53.2/1.0 mass%).

9. The composition comprising a refrigerant according to claim 8, the refrigerant comprising R32, R125, and R1234ze(E),
wherein the total concentration of the three components is 99.5 mass% or more, and
wherein the mass ratio of the three components in a triangle composition diagram having the three components as vertices falls within a region surrounded by a quadrilateral having, as vertices, the following four points:

point P (R32/R125/R1234ze(E) = 62.2/36.8/1.0 mass%),
point Q (R32/R125/R1234ze(E) = 44.0/30.3/25.7 mass%),
point T (R32/R125/R1234ze(E) = 33.4/50.6/16.0 mass%), and
point U (R32/R125/R1234ze(E) = 51.9/47.1/1.0 mass%).

10. The composition comprising a refrigerant according to claim 8 or 9, the refrigerant comprising R32, R125, and R1234ze(E),
wherein the total concentration of the three components is 99.5 mass% or more, and
wherein the mass ratio of the three components in a triangle composition diagram having the three components as vertices falls within a region surrounded by a quadrilateral having, as vertices, the following four points:

point P (R32/R125/R1234ze(E) = 62.2/36.8/1.0 mass%),
point V (R32/R125/R1234ze(E) = 49.0/32.0/19.0 mass%),
point W (R32/R125/R1234ze(E) = 39.2/49.5/11.3 mass%), and
point U (R32/R125/R1234ze(E) = 51.9/47.1/1.0 mass%).

11. The composition according to any one of claims 8 to 10, wherein the refrigerant consists of R32, R125, and R1234ze(E).

12. The composition according to any one of claims 1 to 11, wherein the refrigerant is for use as an alternative refrigerant for R410A.

13. The composition according to any one of claims 1 to 12, wherein the composition comprises at least one substance selected from the group consisting of water, tracers, ultraviolet fluorescent dyes, stabilizers, and polymerization inhibitors.

14. The composition according to any one of claims 1 to 13, the composition further comprising a refrigeration oil and being for use as a working fluid for a refrigeration apparatus.

15. The composition according to claim 14, wherein the refrigeration oil contains at least one polymer selected from the group consisting of polyalkylene glycol (PAG), polyol ester (POE), and polyvinyl ether (PVE).

16. A refrigeration method comprising operating a refrigeration cycle using the composition of any one of claims 1 to 15.

17. A method for operating a refrigeration apparatus that operates a refrigeration cycle using the composition of any one of claims 1 to 15.

18. A refrigeration apparatus comprising the composition of any one of claims 1 to 15 as a working fluid.

19. The refrigerating machine according to claim 18, wherein the refrigeration apparatus is an air-conditioning system, a refrigerator, a freezer, a water cooler, an ice maker, a refrigerated showcase, a freezing showcase, a freezing and refrigerating unit, a refrigerating machine for freezing and refrigerating warehouses, an air-conditioning system for vehicles, a turbo refrigerating machine, or a screw refrigerating machine.

Fig. 1

Fig. 2

Fig. 3

**INTERNATIONAL SEARCH REPORT**

| International application No. |
| --- |
| PCT/JP2019/022378 |

| A. CLASSIFICATION OF SUBJECT MATTER |
| --- |
| Int.Cl. C09K5/04(2006.01)i |
| According to International Patent Classification (IPC) or to both national classification and IPC |

| B. FIELDS SEARCHED |
| --- |
| Minimum documentation searched (classification system followed by classification symbols) |
| Int.Cl. C09K5/04 |
| Documentation searched other than minimum documentation to the extent that such documents are included in the fields searched |
| Published examined utility model applications of Japan   1922–1996<br>Published unexamined utility model applications of Japan   1971–2019<br>Registered utility model specifications of Japan   1996–2019<br>Published registered utility model applications of Japan   1994–2019 |
| Electronic data base consulted during the international search (name of data base and, where practicable, search terms used) |

| C. DOCUMENTS CONSIDERED TO BE RELEVANT | | |
| --- | --- | --- |
| Category* | Citation of document, with indication, where appropriate, of the relevant passages | Relevant to claim No. |
| X<br>A | JP 6-914 B2 (ALLIEDSIGNAL INC.) 05 January 1994, claims 1-5, example 1, table 1<br>& WO 1991/005027 A1, claims 1-5, example 1, table 1 & US 4978467 A & EP 533673 A1 & HK 1007164 A & CA 2065456 A1 & JP 5-500071 A | 1-3, 12-19<br>4-11 |
| X<br>A | JP 4-222893 A (DAIKIN INDUSTRIES, LTD.) 12 August 1992, claims 1-7, example 1, table 2<br>(Family: none) | 1-3, 12-19<br>4-11 |

☒ Further documents are listed in the continuation of Box C.     ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>   29.08.2019 | Date of mailing of the international search report<br>   10.09.2019 |
| Name and mailing address of the ISA/<br>   Japan Patent Office<br>   3-4-3, Kasumigaseki, Chiyoda-ku,<br>   Tokyo 100-8915, Japan | Authorized officer<br><br><br>Telephone No. |

Form PCT/ISA/210 (second sheet) (January 2015)

## INTERNATIONAL SEARCH REPORT

| | International application No. |
|---|---|
| | PCT/JP2019/022378 |

**C (Continuation). DOCUMENTS CONSIDERED TO BE RELEVANT**

| Category* | Citation of document, with indication, where appropriate, of the relevant passages | Relevant to claim No. |
|---|---|---|
| A | JP 2018-501334 A (TRANE INTERNATIONAL INC.) 18 January 2018, claims 1-16, fig. 1-19 & WO 2016/075541 A1, claims 1-16, fig. 1-19 & US 2016/0130490 A1 & EP 3218443 A1 & AU 2015344788 A & CA 2967553 A1 & KR 10-2017-0084164 A & CN 107257836 A & MX 2017005986 A & BR 112017009812 A | 1-19 |
| A | JP 2016-538365 A (THE CHEMOURS COMPANY FC, LLC) 08 December 2016, claims 1-24, fig. 1 & WO 2015/054104 A1, claims 1-24, fig. 1 & US 2016/0215192 A1 & EP 3055380 A1 & TW 201522602 A & CA 2926246 A1 & CN 105874031 A | 1-19 |
| A | JP 2016-186073 A (ARKEMA FRANCE) 27 October 2016, claims 1-18, examples 1-7 & US 2013/0055738 A1, claims 1-18, examples 1-7 & WO 2011/141655 A2 & EP 2569387 A1 & FR 2959998 A & CN 102884151 A | 1-19 |
| A | JP 2016-503450 A (HONEYWELL INTERNATIONAL INC.) 04 February 2016, claims 1-10, tables 1-12 & WO 2014/081539 A1, claims 1-10, tables 1-12 & US 2014/0137578 A1 & EP 2922931 A1 & TW 201439297 A & AU 2013348300 A & CA 2890628 A1 & KR 10-2015-0089026 A & CN 104968756 A & MX 2015006323 A & BR 112015011602 A | 1-19 |
| A | JP 2016-14100 A (FUJITSU GENERAL LIMITED) 28 January 2016, claims 1-8, fig. 1 & US 2016/0002517 A1, claims 1-8, fig. 1 & EP 2963096 A1 & AU 2015203389 A & CN 105315967 A | 1-19 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 1991005027 A